(19) Europäisches Patentamt
European Patent Office
Office européen des brevets

(11) EP 2 106 423 B1

(12) # FASCICULE DE BREVET EUROPEEN

(45) Date de publication et mention de la délivrance du brevet:
**30.08.2017 Bulletin 2017/35**

(21) Numéro de dépôt: **08761784.1**

(22) Date de dépôt: **18.01.2008**

(51) Int Cl.:
***C08L 95/00*** *(2006.01)* ***C08K 5/00*** *(2006.01)*
***C08K 5/04*** *(2006.01)* ***C08K 5/16*** *(2006.01)*
***C08K 5/36*** *(2006.01)* ***C08K 5/49*** *(2006.01)*
***C09D 195/00*** *(2006.01)* ***E01B 7/18*** *(2006.01)*
***E04B 1/66*** *(2006.01)* ***C08K 5/092*** *(2006.01)*

(86) Numéro de dépôt international:
**PCT/FR2008/000066**

(87) Numéro de publication internationale:
**WO 2008/107551 (12.09.2008 Gazette 2008/37)**

(54) **COMPOSITION BITUMINEUSE AUX PROPRIÉTÉS THERMOREVERSIBLES**

BITUMENZUSAMMENSETZUNG MIT THERMOREVERSIBLEN EIGENSCHAFTEN

BITUMINOUS COMPOSITION WITH THERMOREVERSIBLE PROPERTIES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.01.2007 FR 0700441**
**19.07.2007 FR 0705225**

(43) Date de publication de la demande:
**07.10.2009 Bulletin 2009/41**

(73) Titulaires:
- **TOTAL MARKETING SERVICES 92800 Puteaux (FR)**
- **Université Pierre et Marie Curie (Paris 6) 75252 Paris Cedex 05 (FR)**

(72) Inventeurs:
- **LAPALU, Laurence F-69100 Villeurbanne (FR)**
- **VINCENT, Régis F-69520 Grigny (FR)**
- **BOUTEILLER, Laurent F-92340 Bourg la Reine (FR)**
- **ISARE, Benjamin F-62127 Frevillers (FR)**

(74) Mandataire: **Hirsch & Associés 137, rue de l'Université 75007 Paris (FR)**

(56) Documents cités:
**EP-B1- 0 799 280 WO-A-02/053645**
**WO-A-02/055030 FR-A1- 2 376 188**
**US-A- 3 035 930 US-B1- 6 849 581**

- **TERECH P ET AL: "LOW MOLECULAR MASS GELATORS OF ORGANIC LIQUIDS AND THE PROPERTIES OF THEIR GELS" 1997, CHEMICAL REVIEWS, ACS,WASHINGTON, DC, US, PAGE(S) 3133-3159 , XP002127859 ISSN: 0009-2665 cité dans la demande le document en entier**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 106 423 B1

## Description

### Domaine technique

La présente invention appartient au domaine des bitumes. Plus spécifiquement, elle concerne des compositions bitumineuses comprenant un additif de type organogélateur, les compositions bitumineuses présentant des caractéristiques de viscosité et de dureté thermoréversibles.

L'invention concerne également l'utilisation de ces compositions bitumineuses dans les domaines des applications routières, notamment dans la fabrication de liants routiers, et dans les domaines des applications industrielles. L'invention concerne aussi le procédé de préparation de ces compositions bitumineuses.

### Contexte technique

L'utilisation du bitume dans la fabrication de matériaux pour applications routières et industrielles est connue de longue date : le bitume est le principal liant hydrocarboné utilisé dans le domaine de la construction routière ou du génie civil. Pour pouvoir être utilisé comme liant dans ces différentes applications, le bitume doit présenter certaines propriétés physico-chimiques. Une des propriétés les plus importantes, est la dureté du bitume; celle-ci aux températures d'usage doit être suffisamment élevée pour éviter la formation d'ornières provoquée par le trafic. Un autre caractéristique très importante est la viscosité du bitume; le bitume doit être suffisamment fluide à des températures d'application les moins élevées possibles. La mise en oeuvre d'un liant bitumineux nécessite donc de conjuguer à la fois la dureté du bitume aux températures d'usage et une faible viscosité à chaud.

### Art antérieur

Les bitumes sont généralement obtenus à partir de résidus issus de la distillation du pétrole brut atmosphérique et/ou sous vide, mais aussi après élimination des fractions légères des bitumes natifs, des asphaltes ou des sables bitumineux. Pour ajuster la dureté d'un bitume, il est possible de les redistiller à des températures très élevées ou à plus basse pression pour éliminer les fractions légères.

En effet plus le bitume est constitué de fractions lourdes, plus sa dureté sera élevée. Cette technique n'est pas toujours suffisamment efficace et les fractions lourdes ne sont jamais totalement exemptes de fractions légères.

Un autre moyen pour durcir un bitume est de le souffler. Les bitumes soufflés sont fabriqués dans une unité de soufflage, en faisant passer un flux d'air et/ou d'oxygène à travers un bitume de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou en batch. Ce procédé de soufflage présente un certain nombre d'inconvénients. Tout d'abord, les bitumes soufflés étant oxydés, sont plus sensibles au vieillissement que les bitumes de départ. De plus, la fabrication de bitume soufflé nécessite une installation de soufflage spécialement prévue à cet effet. Un des inconvénients majeur des bitumes soufflés est leur viscosité à une température donnée qui est supérieure à celle du bitume de départ.

Un autre inconvénient, lié à cette viscosité élevée, est la nécessité de chauffer le bitume soufflé à une température d'application supérieure à celle d'un bitume de même type non soufflé, ce qui accroît les dépenses énergétiques et nécessite l'usage de protections supplémentaires pour les opérateurs.

Un autre moyen pour durcir un bitume, est de lui ajouter des polymères. La société demanderesse a été l'une des premières à développer et à breveter l'emploi de compositions bitumineuses contenant des polymères (FR2376188, FR7818534, EP0799280, EP0690892). Ces polymères permettent notamment d'améliorer la cohésion du liant, d'améliorer les propriétés élastiques du liant, d'augmenter l'intervalle de plasticité du bitume, d'augmenter la résistance à la déformation et aussi d'augmenter la dureté du bitume par la diminution de sa pénétrabilité. Aux températures d'usage, ces caractéristiques sont donc nettement améliorées. Cependant à chaud l'ajout de polymères à la composition bitumineuse entraîne en règle générale une augmentation de la viscosité de la composition bitumineuse. Pour pouvoir être appliqué sur la chaussée, le liant bitumeux additionné de polymères devra donc être chauffé à une température d'application supérieure à celle d'un liant bitumeux de type équivalent sans polymères. Pour utiliser ces bitumes polymères, on constate les mêmes inconvénients que ceux constatés pour les bitumes soufflés.

La société demanderesse dans la demande de brevet FR2889198, a revendiqué un procédé de soufflage chimique consistant à introduire un additif durcisseur à un bitume, cet additif augmentant la dureté du bitume aux températures d'usage et limitant l'augmentation de la viscosité à chaud.

## Brève description de l'invention

Dans la continuité de ses travaux, la société demanderesse a cherché d'autres composés permettant de durcir aux températures d'usage les bitumes sans augmenter leur viscosité à chaud. La société demanderesse a mis au point de nouvelles compositions bitumineuses présentant aux températures d'usage les caractéristiques des bitumes durcis par addition de polymères et n'ayant pas les caractéristiques des bitumes additionnés de polymères à chaud.

Pour cela, l'invention vise des compositions bitumineuses comprenant une partie majeure d'au moins un bitume et une partie mineure d'au moins un additif chimique, ledit additif chimique étant un organogélateur créant un réseau de liaisons hydrogène entre molécules organogélatrices qui ont une masse molaire inférieure ou égale à 2000 $gmol^{-1}$, ledit organogélateur comprenant au moins un donneur de liaisons hydrogène **D,** au moins un accepteur de liaisons hydrogène **A** et au moins un compatibilisant **C** dans le bitume, le dit compatibilisant **C** comprenant un groupe choisi parmi:

- au moins une chaîne hydrocarbonée linéaire comprenant au moins 4 atomes de carbone, ou
- au moins un cycle aliphatique de 3 à 8 atomes, ou
- au moins un système polycyclique condensé aliphatique, ou en partie aromatique ou encore entièrement aromatique, chaque cycle comprenant 5 ou 6 atomes, pris seuls ou en mélange.

De préférence, le donneur **D** comprend un hétéroatome porteur d'un hydrogène choisi parmi l'azote N, l'oxygène O et/ou le soufre S.

De préférence, le donneur **D** est choisi parmi les groupements alcool, thiol, phénol, amines primaires, amines secondaires, ammoniums quaternaires, amides, urées, hydrazines, acides carboxyliques, oximes, hydrazones, imines et leurs combinaisons.

De préférence, l'accepteur **A** comprend un hétéroatome porteur de doublets électroniques choisi parmi l'oxygène O, le soufre S, l'azote N et/ou le phosphore P.

De préférence, l'accepteur **A** est choisi parmi les groupements C=O, S=O, N=O ou P=O et les groupements hydrocarbonés linéaires ou cycliques contenant dans leur chaîne hydrocarbonée un hétéroatome d'oxygène O, de soufre S, d'azote N ou de phosphore P.

De préférence, l'accepteur **A** est choisi parmi les groupements alcools, phénols, amides, esters, urées, hydrazines, acides, cétones, aldéhydes, lactones, lactames, anhydrides, imides, sulfoxydes, sulfones, sulfonates, sulfates, sulfites, acides sulfoniques, sulfures, éthers, phosphines, phosphites, phosphonates, phosphates, nitrites ou nitrates et leurs combinaisons.

Selon un mode de réalisation, l'organogélateur exclut les composés de type alkyl amido-imidazolidine et alkyl amido-imidazoline.

Selon un mode de réalisation, l'organogélateur, comprend des molécules organogélatrices de structure chimique identique.

Selon un mode de réalisation, l'organogélateur comprend au moins un motif de formule générale (I) :

$$R\text{-}(NH)_nCONH\text{-}(X)_m\text{-}NHCO(NH)_n\text{-}R',$$

- les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
- le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
- n et m sont des entiers ayant une valeur de 0 ou 1 indépendamment l'un de l'autre.

De préférence, l'organogélateur comprend un motif hydrazide quand n et m ont une valeur de 0.

De préférence, l'organogélateur comprend deux motifs amide quand n a une valeur de 0 et m a une valeur de 1.

De préférence, l'organogélateur comprend deux motifs urées quand n et m ont une valeur de 1.

Selon un mode de réalisation, le groupement R et/ou R' comprend une chaîne hydrocarbonée aliphatique de 4 à 22 atomes de carbone, notamment, choisie parmi les groupements $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

Le groupement X comprend une chaîne hydrocarbonée aliphatique de 1 à 2 atomes de carbone.

Le groupement X comprend deux cycles de 6 carbones reliés par un groupement $CH_2$, ces cycles étant aliphatiques ou aromatiques.

Selon un mode de réalisation, l'organogélateur comprend au moins un motif de formule générale (II) :

(R-NHCO)$_x$-Z-(NHCO-R')$_y$

- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants :

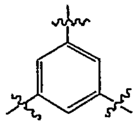

$Z_1$

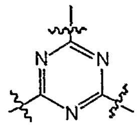

$Z_2$

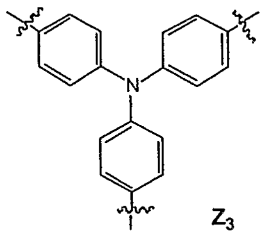

$Z_3$

- x et y sont des entiers différents de valeur variant de 0 à 3 et tels que x+y=3.

Selon un mode de réalisation, l'organogélateur (III) comprend au moins un dérivé du sorbitol. Le dérivé du sorbitol est un produit de réaction entre un aldéhyde et le D-sorbitol.

De préférence, l'organogélateur est le 1,3:2,4-Di-O-benzylidene-D-sorbitol.

Selon un mode de réalisation, l'organogélateur comprend au moins un motif de formule générale (IV) : R''-(COOH)$_z$
avec R'' une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 2 à 4.
De préférence, l'organogélateur est un diacide de formule générale HOOC-$C_wH_{2w}$-COOH avec w un entier variant de 4 à 22, de préférence de 4 à 12 où z = 2 et R'' = $C_wH_{2w}$.

De préférence, l'organogélateur est un diacide choisi parmi les diacides suivants : acide adipique, acide pimélique, acide subérique, acide azélaique, acide sébacique, acide undécanedioïque, acide 1,2-dodécanedioïque ou acide tétradécanedioïque.

Selon un mode de réalisation, l'organogélateur comprend au moins un motif de formule générale (V) :

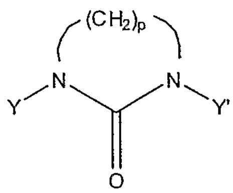

les groupements Y et Y' représentent indépendamment l'un de l'autre, un atome ou groupement choisi parmi : H, -$(CH_2)$q-$CH_3$, -$(CH_2)$q-$NH_2$, -$(CH_2)$q-OH, - $(CH_2)$q-COOH ou

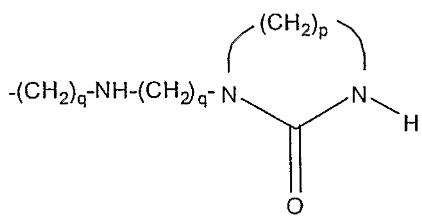

avec q un entier variant de 2 à 18, de préférence de 2 à 10, de préférence de 2 à 4 et p un entier supérieur ou égal à 2, de préférence ayant une valeur de 2 ou 3.

De préférence, l'organogélateur a pour formule :

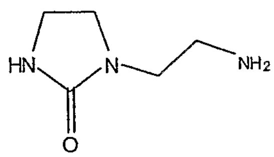

Selon un mode de réalisation, l'organogélateur comprend au moins un motif de formule générale (VI) : R-NH-CO-CO-NH-R'
avec R et R', identiques ou différents, qui représentent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles.

Selon un mode de réalisation, l'organogélateur (VII) comprend au moins 2 molécules organogélatrices de structure chimique différente, l'ensemble des trois motifs **A, D** et **C** se retrouvant dans l'organogélateur.

De préférence, l'organogélateur comprend un dérivé d'une amine et un dérivé d'acide carboxylique.

De préférence, l'organogélateur comprend un dérivé d'une aminopyrimidine et un dérivé d'acide barbiturique.

De préférence, l'organogélateur comprend un dérivé de sulfosuccinate et un dérivé du phénol.

Selon un mode de réalisation, les molécules organogélatrices ont une masse molaire inférieure ou égale à 1000 $gmol^{-1}$.

Selon un mode de réalisation, l'organogélateur est présent de 0,1 à 5% en masse par rapport au bitume.

Selon un mode de réalisation, Le bitume comprend en outre au moins un polymère et/ou un fluxant.

De préférence, le bitume est choisi parmi les résidus de distillation atmosphérique, les résidus de distillation sous vide, les résidus viscoréduits, les résidus soufflés, leurs mélanges et leurs combinaisons.

L'invention concerne en outre l'utilisation de ces compositions bitumineuses pour fabriquer des liants bitumineux, notamment des liants anhydres, des émulsions bitumineuses, des bitumes polymères ou des bitumes fluxés. Ces liants bitumineux pouvant ensuite être associés à des granulats pour fournir des enduits superficiels, des enrobés à chaud, des enrobés à froid, des enrobés coulés à froid, des graves émulsions ou des couches de roulement. Les applications des compositions bitumineuses selon l'invention pouvant être utilisées dans des applications routières ou des applications industrielles telles que les revêtements d'étanchéité, les membranes ou couches d'imprégnation.

L'invention concerne enfin, un procédé pour obtenir une composition bitumineuse dure aux températures d'usage sans augmenter sa viscosité à chaud, au cours duquel l'organogélateur peut être introduit indifféremment à une température entre 140 et 180°C dans le bitume seul, ou en cours de fabrication, dans le bitume polymère, dans le bitume sous forme de liant bitumineux ou dans le bitume lorsque celui-ci est sous forme de liant anhydre, sous forme d'enrobé ou d'enduit superficiel.

L'avantage de la présente invention est d'obtenir des compositions bitumineuses adaptées à chaque usage envisagé et cela quelque soit la dureté du bitume utilisé. Ainsi l'obtention d'une composition bitumineuse dure n'est dépendante ni de la nature du pétrole brut utilisé, ni de la quantité de fractions légères contenues dans les bitumes utilisés.

## Description détaillée de l'invention

Par organogélateur au sens de l'invention, on entend une association de plusieurs molécules dites organogélatrices de structure chimique identique ou différente. Dans le bitume, ces molécules organogélatrices sont capables d'établir entre elles des interactions physiques conduisant à une auto-agrégation avec formation d'un réseau supramoléculaire 3D qui est responsable de la gélification du bitume. L'empilement des molécules organogélatrices résulte dans la formation d'un réseau de fibrilles, immobilisant les molécules du bitume.

Aux températures d'usage, allant de 10 à 60°C, les molécules organogélatrices se lient entre elles de manière non-covalente, notamment par des liaisons hydrogène. Ces liaisons hydrogène disparaissent lorsque le bitume est chauffé à haute température. Ainsi aux températures d'usage, l'organogélateur constitué d'un grand nombre de molécules organogélatrices peut être assimilé à un polymère « supramoléculaire » et confère au bitume ainsi modifié les propriétés d'une composition bitume/polymère classique, notamment au niveau de la dureté. Aux températures d'usage, la gélification due à l'agrégation des molécules organogélatrices, provoque un épaississement du milieu bitumineux, conduisant à une augmentation de la dureté. Le bitume ne s'écoule plus sous son propre poids, sa dureté aux températures d'usage est accrue par rapport au bitume de départ seul sans additif organogélateur. Lorsque la composition bitumineuse est chauffée, les interactions stabilisant l'organogélateur, disparaissent, et le bitume retrouve les propriétés d'un bitume non additivé, la viscosité de la composition bitumineuse à chaud redevient celle du bitume de départ.

Les interactions physiques entre molécules organogélatrices sont diverses et incluent en particulier des interactions du type liaisons hydrogène entre un donneur de liaisons hydrogène **D** et un accepteur de liaisons hydrogène **A,** des interactions $\pi$ entre cycles insaturés, des interactions dipolaires et leurs associations. Les molécules organogélatrices peuvent établir un seul ou plusieurs types d'interactions avec des molécules voisines. L'établissement de l'une

ou l'autre de ces interactions sera favorisé par l'architecture des molécules organogélatrices.

Dans le cadre de l'invention, l'organogélateur, constitué de plusieurs molécules organogélatrices, comprend plusieurs groupements capables d'établir des liaisons hydrogène. Pour établir ces liaisons hydrogène, l'organogélateur comprend au moins un accepteur de liaisons hydrogène **A,** au moins un donneur de liaisons hydrogène **D.**

Pour pouvoir gélifier et prendre en masse le bitume, l'organogélateur doit être soluble à chaud dans le bitume. Les constituants chimiques principaux du bitume sont les asphaltènes et les maltènes. Les asphaltènes sont des composés notamment hétérocycliques constitués de nombreux noyaux aromatiques et de cycles naphténiques pluricondensés. Les maltènes quant à eux sont principalement constitués de longues chaînes paraffiniques. Par conséquent, l'organogélateur selon l'invention comprend au moins un groupement chimique **C** compatibilisant l'organogélateur avec les composés chimiques du bitume. Ce compatibilisant **C** peut comprendre, pris seul ou en mélange, un groupe choisi parmi : au moins une longue chaîne hydrocarbonée compatible avec la fraction maltène du bitume, ou au moins un cycle aliphatique de 3 à 8 atomes, ou au moins un système polycyclique condensé aliphatique, partiellement aromatique ou entièrement aromatique, compatibles avec la fraction asphaltène du bitume, chaque cycle comprenant 5 ou 6 atomes.

Selon un mode préféré de l'invention, l'organogélateur comprend par conséquent au moins un donneur de liaisons hydrogène **D,** au moins un accepteur de liaisons hydrogène **A** pour pouvoir former des liaisons hydrogène entre molécules organogélatrices et au moins un compatibilisant **C** dans le bitume comprenant au moins une chaîne hydrocarbonée linéaire d'au moins 4 atomes de carbone. Cette chaîne hydrocarbonée linéaire comprend donc au moins 4 atomes de carbone, de préférence vicinaux, liés de manière covalente.

Le compatibilisant **C** permet à la fois d'augmenter la solubilité de l'organogélateur dans le bitume mais également de renforcer les interactions entre molécules organogélatrices.

Selon un autre mode préféré de l'invention, l'organogélateur comprend au moins un donneur de liaisons hydrogène **D,** au moins un accepteur de liaisons hydrogène **A** pour pouvoir former des liaisons hydrogène entre molécules organogélatrices et au moins un compatibilisant **C** dans le bitume comprenant au moins un cycle aliphatique de 3 à 8 atomes.

Selon un autre mode préféré de l'invention, l'organogélateur comprend au moins un donneur de liaisons hydrogène **D,** au moins un accepteur de liaisons hydrogène **A** pour pouvoir former des liaisons hydrogène entre molécules organogélatrices et au moins un compatibilisant **C** dans le bitume comprenant au moins un système polycyclique condensé aliphatique, ou partiellement aromatique ou entièrement aromatique, chaque cycle comprenant 5 ou 6 atomes. Ces systèmes polycycliques apportent de par leur structure la compatibilité avec la fraction asphaltène du bitume.

Selon un mode préféré de l'invention, le donneur de liaisons hydrogène **D** comprend un hétéroatome porteur d'un hydrogène choisi parmi l'azote N, l'oxygène O et/ou le soufre S.

Selon un mode préféré de l'invention, l'accepteur de liaisons hydrogène **A** comprend un hétéroatome porteur de doublets électroniques choisi parmi l'oxygène O, le soufre S, l'azote N et/ou le phosphore P.

Ainsi le donneur **D** peut être choisi parmi les groupements alcool, thiol, phénol, amines primaires, amines secondaires, ammoniums quaternaires, amides, urées, hydrazines, acides carboxyliques, oximes, hydrazones, imines et leurs combinaisons.

L'accepteur **A** peut être choisi parmi les groupements C=O, S=O, P=O ou N=O et les groupements hydrocarbonés linéaires ou cycliques contenant dans leur chaîne hydrocarbonée un hétéroatome d'oxygène O, de soufre S, d'azote N ou de phosphore P.

De préférence, l'accepteur **A** est choisi parmi les groupements alcools, phénols, amides, esters, urées, hydrazines, acides carboxyliques, cétones, aldéhydes, lactones, lactames, anhydrides, imides, sulfoxydes, sulfones, sulfonates, sulfates, sulfites, acides sulfoniques, sulfures, éthers, phosphines, phosphites, phosphonates, phosphates, nitrates ou nitrites et leurs combinaisons.

Selon l'invention, l'organogélateur peut contenir des molécules organogélatrices ayant toutes la même structure chimique. Les trois motifs **A, D** et **C** sont présents dans chaque molécule organogélatrice pour qu'un gel puisse se former dans la phase bitume.

Les organogélateurs utilisables dans l'invention sont notamment ceux décrits dans l'article de P. Terech et R. G. Weiss « Low molecular mass gelators of organic liquids and the properties of their gels » (Chem. Rev. 1997, 97, 3133-3159).

Plus spécialement, l'organogélateur selon l'invention peut contenir des molécules organogélatrices de formule **(I)** suivante :

$$R\text{-}(NH)_nCONH\text{-}(X)_m\text{-}NHCO(NH)_n\text{-}R' \qquad \textbf{(I)}$$

Dans laquelle:

- R et R', identique ou différents, contiennent une chaîne hydrocarbonée saturée ou insaturée, linéaire, cyclique ou ramifiée, comprenant de 1 à 22 atomes de carbone, éventuellement substituée et comprenant éventuellement des

hétéroatomes, des cycles et/ou des hétérocycles ;

- X contient une chaîne hydrocarbonée, saturée ou insaturée, linéaire, cyclique ou ramifiée, comprenant de 1 à 22 atomes de carbone, éventuellement substituée et comprenant éventuellement des hétéroatomes, des cycles et/ou des hétérocycles;
- n et m sont des entiers ayant indépendamment l'un de l'autre une valeur de 0 ou de 1.

Dans une variante de l'invention, l'entier m a une valeur de 0. Dans ce cas particulier, les groupements $R-(NH)_nCONH$ et $NHCO(NH)_n-R'$ sont liés de façon covalente par une liaison hydrazide CONH-NHCO. Dans ce cas, le groupement R ou le groupement R', ou les deux, constituent le compatibilisant **C.** Le groupement R ou le groupement R', comprend alors un groupement choisi parmi au moins une chaîne hydrocarbonée d'au moins 4 atomes de carbone, au moins un cycle aliphatique de 3 à 8 atomes, au moins un système polycyclique condensé aliphatique, partiellement aromatique ou entièrement aromatique, chaque cycle comprenant 5 ou 6 atomes, pris seul ou en mélange.

De préférence, R et R', identique ou différents, sont des chaînes hydrocarbonées linéaires, saturées comprenant de 4 à 22 atomes de carbone. Parmi les chaînes hydrocarbonées linéaires, saturées préférées, on peut citer les groupements $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

Dans une autre variante de l'invention, l'entier m a une valeur de 1. Dans ce cas, le groupement R, le groupement R' et/ou le groupement X constituent le compatibilisant C. Le groupement R, le groupement R' et/ou le groupement X, comprend alors un groupement choisi parmi au moins une chaîne hydrocarbonée d'au moins 4 atomes de carbone, au moins un cycle aliphatique de 3 à 8 atomes, au moins un système polycyclique condensé aliphatique, partiellement aromatique ou entièrement aromatique, chaque cycle comprenant 5 ou 6 atomes, pris seul ou en mélange.

De préférence, le groupement X représente une chaîne hydrocarbonée linéaire, saturée comprenant de 1 à 22 atomes de carbone. De préférence, le groupement X est choisi parmi les groupements $C_2H_4$, $C_3H_6$.

Le groupement X peut aussi être un groupement cyclohexyl ou un groupement phenyl, les radicaux $R-(NH)_nCONH-$ et $NHCO(NH)_n-R'-$ peuvent alors être en position ortho, méta ou para. Par ailleurs, ils peuvent être en position cis ou trans l'un par rapport à l'autre. De plus, lorsque le radical X est cyclique, ce cycle peut être substitué par d'autres groupements que les deux groupements principaux $R-(NH)_nCONH-$ et $-NHCO(NH)_n-R'$.

Le groupement X peut également comprendre deux ou plusieurs cycles aliphatiques et/ou aromatiques condensés ou non. Ainsi selon une variante préférée de l'invention, le groupement X est un groupement comportant deux cycles aliphatiques reliés par un groupement $CH_2$ éventuellement substitué comme par exemple:

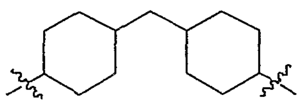

Selon une autre variante de l'invention, le groupement X est un groupement comportant deux cycles aromatiques reliés par un groupement $CH_2$ éventuellement substitué comme par exemple:

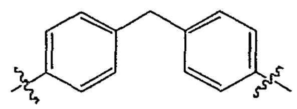

Parmi les organogélateurs préférés selon l'invention, on peut citer les dérivés hydrazides répondant aux formules suivantes:

$C_5H_{11}-CONH-NHCO-C_5H_{11}$

$C_9H_{19}-CONH-NHCO-C_9H_{19}$

$C_{11}H_{23}-CONH-NHCO-C_{11}H_{23}$

$C_{17}H_{35}-CONH-NHCO-C_{17}H_{35}$

$C_{21}H_{43}-CONH-NHCO-C_{21}H_{43}$

On peut également citer les diamides, dont une diamide préférée est la N,N'-ethylenedi(stearamide), $C_{17}H_{35}-CONH-CH_2-CH_2-NHCO-C_{17}H_{35}$.

D'autres composés préférés sont les dérivés uréides, dont une urée particulière la 4,4'-bis(dodecylaminocarbonylamino)diphenylmethane a pour formule:

$$C_{12}H_{25}\text{-NHCONH-}C_6H_4\text{-}CH_2\text{-}C_6H_4\text{-NHCONH-}C_{12}H_{25}.$$

Toujours selon l'invention l'organogélateur peut contenir des molécules organogélatrices de formule **(II)** suivante :

$$(R\text{-NH-CO})_x\text{-Z-}(NH\text{-CO-R'})_y \qquad \textbf{(II)}$$

Dans laquelle:

- R et R', identiques ou différents, contiennent une chaîne hydrocarbonée saturée ou insaturée, linéaire, ramifiée ou cyclique comprenant de 1 à 22 atomes de carbone, éventuellement substituée, et comprenant éventuellement des hétéroatomes, des cycles et/ou des hétérocycles ;
- Z représente un groupement tri-fonctionnalisé choisi parmi les groupements suivants :

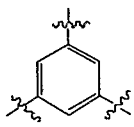
$Z_1$

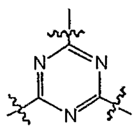
$Z_2$

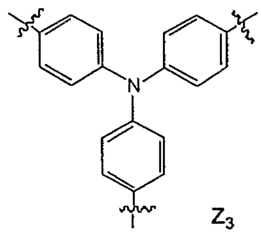
$Z_3$

- x et y sont des entiers différents de valeur variant de 0 à 3 et tels que x+y=3.

Parmi les composés préférés répondant à la formule **(II)**, on peut citer, lorsque x est égal à 0 et Z représente $Z_2$, la N2, N4, N6-tridecylmélamine ayant la formule suivante avec R' représentant le groupe $C_9H_{19}$ :

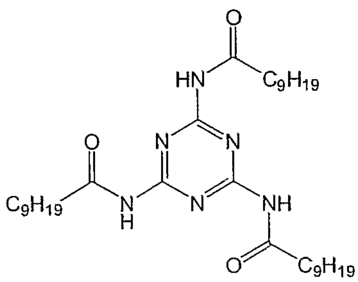

D'autres composés préférés répondant à la formule **(II)**, sont tels que x est égal à 0, Z représente $Z_2$ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule **(II)**, sont tels que y est égal à 0 et Z représente $Z_1$, les composés ont alors pour formule :

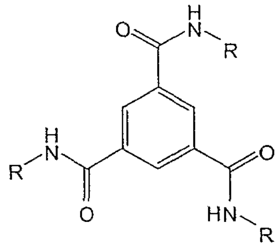

avec R choisi parmi les groupes suivants pris seuls ou mélanges :

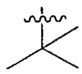
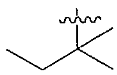
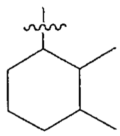
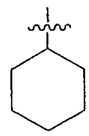
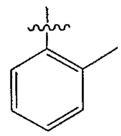

D'autres composés préférés répondant à la formule **(II)**, sont tels que y est égal à 0, Z représente $Z_1$ et R représente une chaîne hydrocarbonée saturée, linéaire, de 1 à 22 atomes de carbone, de préférence de 8 à 12 atomes de carbone.

Toujours selon l'invention, l'organogélateur comprend des dérivés du sorbitol **(III)** et en particulier, le 1,3:2,4-Di-O-benzylidene-D-sorbitol.

Par dérivé du sorbitol, on entend tout produit de réaction, obtenu à partir du sorbitol. En particulier, tout produit de réaction, obtenu en faisant réagir un aldéhyde avec du sorbitol. On obtient par cette réaction de condensation, des acétals de sorbitol, qui sont des dérivés du sorbitol. Le 1,3:2,4-Di-O-benzylidene-D-sorbitol est obtenu en faisant réagir 1 mole de D-sorbitol et 2 moles de benzaldéhyde et a pour formule :

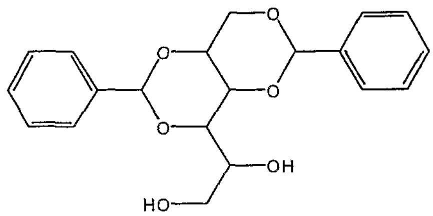

Les dérivés du sorbitol pourront ainsi être tous les produits de condensation d'aldéhydes, notamment aromatiques avec le sorbitol. On obtiendra alors des dérivés du sorbitol de formule générale :

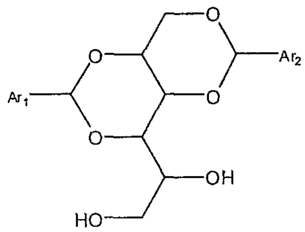

Où $Ar_1$ et $Ar_2$ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol.

A la place du sorbitol, on pourrait envisager d'utiliser tout autre polyalcool comme par exemple, le xylitol, le mannitol et/ou le ribitol.

Toujours selon l'invention, d'autres organogélateurs contiennent des molécules organogélatrices de formule générale **(IV),** avec R" une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 2 à 4 : $R''\text{-}(COOH)_z$ **(IV)**

Les organogélateurs répondant à la formule **(IV)** peuvent être des diacides (z = 2), des triacides (z = 3) ou des tétracides (z = 4). Les organogélateurs préférés sont des diacides avec z = 2. De même, le groupement R" est de préférence, une chaîne linéaire saturée de formule $C_wH_{2w}$ avec w un entier variant de 4 à 22, de préférence de 4 à 12. De préférence, les diacides ont pour formule générale $HOOC\text{-}C_wH_{2w}\text{-}COOH$ avec w un entier variant de 4 à 22, de préférence de 4 à 12 et où z = 2 et R" = $C_wH_{2w}$.

Les diacides préférés sont les suivants :

- l'acide adipique ou acide 1,6-hexanedioïque avec w = 4

- l'acide pimélique ou acide 1,7-heptanedioïque avec w = 5
- l'acide subérique ou acide 1,8-octanedioïque avec w = 6
- l'acide azélaique ou acide 1,9-nonanedioïque avec w = 7
- l'acide sébacique ou acide 1,10-decanedioïque avec w = 8
- l'acide undécanedioïque avec w = 9
- l'acide 1,2-dodécanedioïque avec w = 10
- l'acide tétradécanedioïque avec w = 12

Les diacides peuvent aussi être des dimères diacide d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacide d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en $C_8$ à $C_{34}$, notamment en $C_{12}$ à $C_{22}$, en particulier en $C_{16}$ à $C_{20}$, et plus particulièrement en $C_{18}$. Un dimère d'acide gras préféré est obtenu par dimérisation de l'acide linoléïque, celui_ci pouvant ensuite être partiellement ou totalement hydrogéné. Un autre dimère d'acide gras préféré a pour formule $HOOC-(CH_2)_7-CH=CH-(CH_2)_7-COOH$. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

D'autres organogélateurs contiennent des molécules organogélatrices de formule générale **(V)** suivante :

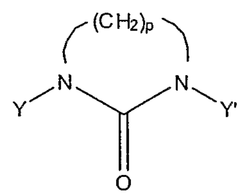

Les groupements Y et Y' représentent indépendamment l'un de l'autre, un atome ou groupement choisi parmi : H, $-(CH_2)q-CH_3$, $-(CH_2)q-NH_2$, $-(CH_2)q-OH$, $-(CH_2)q-COOH$ ou

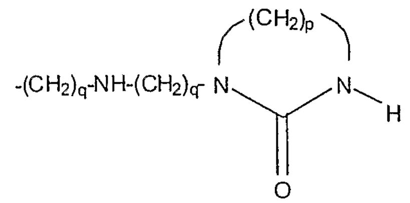

avec q un entier variant de 2 à 18, de préférence de 2 à 10, de préférence de 2 à 4 et p un entier supérieur ou égal à 2, de préférence ayant une valeur de 2 ou 3.

Parmi les organogélateurs préférés répondant à la formule **(V),** on peut citer les composés suivants :

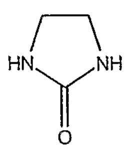
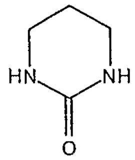
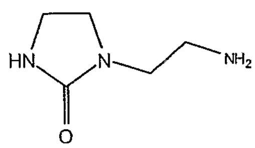

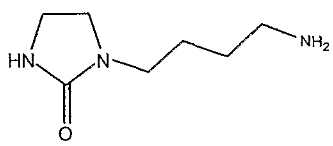
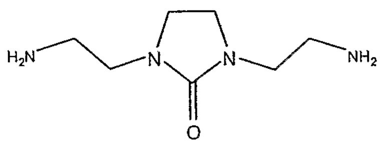

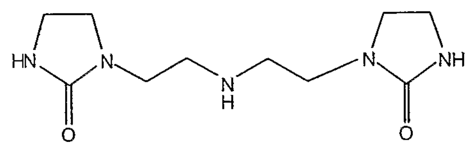

Toujours selon l'invention, d'autres organogélateurs contiennent des molécules organogélatrices de formule générale **(VI)** R-NH-CO-CO-NH-R', avec R et R', identiques ou différents, qui représentent une chaîne hydrocarbonée saturée ou insaturée, linéaire, ramifiée ou cyclique comprenant de 1 à 22 atomes de carbone, éventuellement substituée, et comprenant éventuellement des hétéroatomes, des cycles et/ou des hétérocycles.

De préférence, R et R', identiques ou différents, représentent une chaîne hydrocarbonée saturée, linéaire, comprenant de 1 à 22 atomes de carbone, de préférence de 8 à 12 atomes de carbone.

Toujours selon l'invention l'organogélateur peut également contenir des molécules organogélatrices n'ayant pas toutes la même structure chimique. Ainsi selon l'invention, l'organogélateur **(VII)** peut contenir au moins deux types de molécules organogélatrices ayant une structure chimique différente. Lorsqu'il y a deux types de molécules organogélatrices, les trois motifs **A, D** et **C** se retrouvent en globalité dans l'organogélateur constitué de molécules organogélatrices de structure chimique différente, mais répartis différemment sur ces deux types de molécules organogélatrices. Ainsi si on considère un type $T_1$ de molécules organogélatrices et un deuxième type $T_2$, $T_1$ peut contenir les motifs **A** et C et $T_2$ contenir le motif **D.** On peut également avoir la combinaison **D + C** dans un premier type $T_1$ de molécules organogélatrices et A dans un deuxième type $T_2$ de molécules organogélatrices. On peut aussi envisager un premier type $T_1$ ayant les trois motifs **A, D, C** et un deuxième type $T_2$ ayant aussi les trois motifs **A, C, D** mais basé sur une structure chimique différente. Les trois motifs n'étant pas de même nature chimique ou pas répartis de la même façon sur $T_1$ et $T_2$.

Parmi ces organogélateurs **(VII)** comprenant deux types de molécules organogélatrices, on peut citer les combinaisons des dérivés choisis parmi les dérivés d'amine, les dérivés d'aminopyrimidine ou les dérivés du phénol associés à des molécules choisies parmi les dérivés d'acide carboxylique, les dérivés d'acide barbiturique ou les dérivés de sulfosuccinate.

De préférence on peut citer les combinaisons :

- des dérivés d'amine associés à des dérivés d'acide carboxylique,
- des dérivés d'aminopyrimidine associés à des dérivés d'acide barbiturique,
- des dérivés du phénol associé à des dérivés de sulfosuccinate.

Parmi ces combinaisons on peut citer notamment l'association du 5-octyl-2, 4, 6-triaminopyrimidine et du 5,5-dioctylbarbituric acide ou l'association du 5-octyl-2, 4, 6-triaminopyrimidine et de l'acide barbiturique.

On peut aussi citer les associations du 2-naphtol ou acide tannique ou lauryl gallate avec les sels de sodium du dioctyl sulfocuccinate ou du dihexyl sulfosuccinate.

On ne sortira pas du cadre de l'invention en combinant plusieurs molécules différentes telles que celles précédemment citées et notamment les molécules décrites dans les formules **(I), (II), (III), (IV), (V), (VI)** et **(VII).**

Selon un mode préféré de l'invention les molécules organogélatrices ont une masse molaire inférieure ou égale à 2000 $gmol^{-1}$ et de préférence inférieure ou égale à 1000 $gmol^{-1}$.

La température de rupture $T_R$ à laquelle le réseau de liaisons hydrogène disparaît est fonction du nombre et de la force des liaisons crées au sein de l'organogélateur et est par conséquent fonction de la structure chimique des molécules organogélatrices et de la concentration de l'organogélateur dans le bitume. La température de rupture $T_R$ est selon l'invention comprise entre 40°C et 120°C. Ces températures ont été déterminées de manière expérimentale par des mesures de température de ramollissement Bille et Anneau telle que définie dans la norme NF EN 1427. Ces températures de rupture ont pu être corrélées à la disparition des liaisons hydrogène grâce à la spectroscopie infrarouge qui a permis de suivre l'évolution de l'intensité des bandes d'absorptions correspondantes aux liaisons hydrogène présentes dans l'organogélateur aux différentes températures de test.

Les compositions bitumineuses selon l'invention sont constituées d'une partie majeure de bitume et d'une partie mineure d'organogélateur. L'organogélateur représente de 0,1 à 5,0% en poids par rapport au poids de bitume. Une quantité inférieure à 0,1% en poids d'organogélateur pourrait être insuffisante pour obtenir une composition bitumineuse selon l'invention, car les molécules organogélatrices seraient trop éloignées les unes des autres pour se lier entre elles; tandis qu'une quantité supérieure à 5,0% en poids d'organogélateur peut ne pas être nécessaire, car l'organogélateur agit à faible dose. Selon une mise en oeuvre préférée, l'organogélateur représente de 0,5 à 3% en poids par rapport au poids de bitume, et mieux encore, de 1 à 2% en poids par rapport au poids de bitume.

Les compositions bitumineuses selon l'invention peuvent contenir des bitumes issus de différentes origines. On peut citer tout d'abord les bitumes d'origine naturelle, ceux contenus dans des gisements de bitume naturel, d'asphalte

naturel ou les sables bitumineux.

Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Les bitumes utilisés peuvent également être des bitumes fluxés par addition de solvants volatils, de fluxants d'origine pétrolière, de fluxants carbochimiques et/ou de fluxants d'origine végétale.

Les bitumes utilisés peuvent aussi être des bitumes spéciaux comme les bitumes modifiés par ajout de polymères. A titre d'exemples de polymères pour bitume, on peut citer les élastomères tels que les copolymères SB, SBS, SIS, SBS*, SBR, EPDM, polychloroprène, polynorbornène et éventuellement les polyoléfines tels que les polyéthylènes PE, PEHD, le polypropylène PP, les plastomères tels que les EVA, EMA, les copolymères d'oléfines et d'esters carboxyliques insaturés EBA, les copolymères polyoléfines élastomères, les polyoléfines du type polybutène, les copolymères de l'éthylène et d'esters de l'acide acrylique, méthacrylique ou de l'anhydride maléique, les copolymères et terpolymères d'éthylène et de méthacrylate de glycidyle les copolymères éthylène-propylène, les caoutchoucs, les polyisobutylènes, les SEBS, les ABS.

D'autres additifs peuvent encore être ajoutés à une base bitume selon l'invention. Il s'agit par exemple d'agents de vulcanisation et/ou d'agents de réticulation susceptibles de réagir avec un polymère, lorsqu'il s'agit d'un élastomère et/ou d'un plastomère, pouvant être fonctionnalisés et/ou pouvant comporter des sites réactifs.

Parmi les agents de vulcanisation, on peut citer ceux à base de soufre et ses dérivés, utilisés pour réticuler un élastomère à des teneur de 0,01% à 30% par rapport au poids d'élastomère.

Parmi les agents de réticulation, on peut citer les agents de réticulation cationiques tels que les mono ou poly acides, ou anhydride carboxyliques, les esters d'acides carboxyliques, les acides sulfoniques, sulfurique, phosphoriques, voire les chlorures d'acides, les phénols, à des teneurs de 0,01% à 30% par rapport au polymère. Ces agents sont susceptibles de réagir avec l'élastomère et/ou le plastomère fonctionnalisé. Ils peuvent être utilisés en complément ou en remplacement des agents de vulcanisation.

Diverses utilisations des compositions bitumineuse obtenues selon l'invention sont envisagées, notamment pour la préparation d'un liant bitumineux, lequel peut à son tour être employé pour préparer une association avec des granulats, notamment routiers. Un autre aspect de l'invention est l'utilisation d'une composition bitumineuse dans diverses applications industrielles, notamment pour préparer un revêtement d'étanchéité, une membrane ou une couche d'imprégnation.

S'agissant des applications routières, l'invention vise notamment des enrobés bitumineux comme matériaux pour la construction et l'entretien des corps de chaussée et de leur revêtement, ainsi que pour la réalisation de tous travaux de voiries. Ainsi, l'invention concerne par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

S'agissant des applications industrielles des compositions bitumineuses, on peut citer la fabrication de membranes d'étanchéité, de membranes anti-bruit, de membranes d'isolation, des revêtements de surface, des dalles de moquette, des couches d'imprégnation, etc.

L'invention vise également un procédé pour obtenir une composition bitumineuse dure aux températures d'usage sans augmenter sa viscosité à chaud. L'organogélateur peut être introduit indifféremment dans le bitume seul, ou en cours de fabrication, dans le bitume polymère, dans le liant bitumineux, dans le liant sous forme anhydre ou sous forme d'enrobé , mais toujours à chaud à des températures variant de 140 à 180°C. Les mélanges peuvent ensuite être agités à ces températures jusqu'à solubilisation de l'organogélateur dans le bitume, le bitume polymère, le liant bitumineux, le liant sous forme anhydre ou sous forme d'enrobé.

## Exemples

L'invention est illustrée par les exemples suivants donnés à titre non limitatif. Les caractéristiques rhéologiques et mécaniques des bitumes ou des compositions bitume-organogélateur auxquelles on fait référence dans ces exemples sont mesurées de la façon indiquée dans le tableau 1. Par ailleurs, la viscosité Brookfield est exprimée en mPa.s. La viscosité est mesurée au moyen d'un viscosimètre Brookfield CAP 2000+. Elle est mesurée à 140 et 160°C et à une vitesse de rotation de 300 tr/min. La lecture de la mesure est réalisée après 30 secondes pour chaque température.

Tableau 1

| Propriété | Abréviation | Unité | Norme de mesure |
|---|---|---|---|
| Pénétrabilité à l'aiguille à 25°C | $P_{25}$ | 1/10mm | NF EN 1426 |
| Température de ramollissement bille et anneau | TBA | °C | NF EN 1427 |
| Viscosité Brookfield | - | MPa.s | Cf. exemples |

**Exemple 1 : Préparation d'une composition bitume/organogélateur de formule (I)**

Ce premier exemple concerne des compositions bitume + organogélateur de formule générale **(I)** selon l'invention. Cinq types de molécules organogélatrices ont été utilisés dans cet exemple, à différentes concentrations. Leurs structures chimiques sont les suivantes :

$C_5H_{11}$-CONH-NHCO-$C_5H_{11}$ **(1)**

$C_9H_{19}$-CONH-NHCO-$C_9H_{19}$ **(2)**

$C_{11}H_{23}$-CONH-NHCO-$C_{11}H_{23}$ **(3)**

$C_{17}H_{35}$-CONH-$CH_2$-$CH_2$-NHCO-$C_{17}H_{35}$ **(4)**

$C_{12}H_{25}$-NHCONH-$C_6H_4$-$CH_2$-$C_6H_4$-NHCONH-$C_{12}H_{25}$ **(5)**

Les préparations sont réalisées à 160-170°C, dans un réacteur sous agitation. On introduit d'abord le bitume témoin $C_1$ dans le réacteur. Ensuite, on ajoute l'organogélateur. Les mélanges sont agités pendant environ 60 minutes. Leur aspect final est homogène. Les mélanges sont refroidis à température ambiante. Le bitume témoin $C_1$ est un bitume de grade 70-100 de distillation directe dont les caractéristiques répondent à la norme NF EN 12591.

Tableau 2

| Compositions | Nature de l'organogélateur | Concentration en organogélateur |
|---|---|---|
| $C_1$ (témoin) | - | 0% |
| $C_2$ | **(1)** | 1% |
| $C_3$ | **(1)** | 2% |
| $C_4$ | **(1)** | 3% |
| $C_5$ | **(2)** | 2% |
| $C_6$ | **(2)** | 3% |
| $C_7$ | **(3)** | 2% |
| $C_8$ | **(3)** | 3% |
| $C_9$ | **(3)** | 4% |
| $C_{10}$ | **(4)** | 2% |
| $C_{11}$ | **(4)** | 3% |
| $C_{12}$ | **(5)** | 3% |

*Détermination de la température de rupture $T_R$ par spectroscopie infrarouge*

Pour effectuer les mesures, on prélève une goutte du mélange préchauffé que l'on dispose sur une pastille de KBr, puis on racle la pastille de KBr avec une lame de verre sur pour obtenir un "film" relativement translucide. L'appareil IR utilisé est un Nicolet Avatar 320 spectrometer, le régulateur de température est un (P/N21525) de chez Specac. A différentes températures, on suit l'évolution des bandes d'absorptions des groupements impliqués dans les liaisons hydrogène.

Pour la composition particulière $C_6$, on obtient les spectres de la Figure 1.

Plus la température augmente, plus l'intensité de la bande autour de 3200 $cm^{-1}$ des NH liés diminue. En portant l'intensité de la bande des NH liés en fonction de la température, on obtient le graphique de la Figure 2 qui nous donne la température de rupture $T_R$ = 105°C de la composition $C_6$.

Pour la composition $C_4$, la température de rupture $T_R$ obtenue est de 85°C.

Pour la composition $C_8$, la température de rupture $T_R$ obtenue est de 105°C.

Ces températures de rupture sont également déterminées en mesurant la température de ramollissement bille et anneau. Les résultats sont consignés dans le tableau 3 suivant :

*Détermination des propriétés physiques des compositions bitume+organogélateur*

Tableau 3

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ (témoin) | 76 | 46,6 | -1,0 | 267 | 165 |
| $C_2$ | 62 | 48,4 | -1,1 | 261 | 160 |
| $C_3$ | 51 | 70,8 | 3,0 | 255 | 158 |
| $C_4$ | 46 | 86,4 | 4,9 | 250 | 155 |
| $C_5$ | 55 | 81,4 | 4,8 | 242 | 153 |
| $C_6$ | 52 | 105,2 | 7,4 | 228 | 148 |
| $C_7$ | 55 | 80,6 | 4,7 | 240 | 151 |
| $C_8$ | 50 | 102,6 | 6,9 | 232 | 147 |
| $C_9$ | 47 | 111,0 | 7,5 | 224 | 145 |
| $C_{10}$ | 58 | 91,0 | 6,1 | 225 | 145 |
| $C_{11}$ | 55 | 96,5 | 6,5 | 203 | 144 |
| $C_{12}$ | 69 | 52,2 | 0,14 | 298 | 173 |

La pénétrabilité à l'aiguille, mesurée à 25°C, est exprimée en 1/10 mm.

Le point de ramollissement bille et anneau est exprimé en °C.

L'indice de pénétrabilité Pfeiffer est défini par la formule de calcul suivante :

$$IP = \frac{1952 - 500 \times \log(P_{25}) - 20 \times TBA}{50 \times \log(P_{25}) - TBA - 120}$$

La viscosité, mesurée à 160°C, est exprimée en mPa $s^{-1}$.

Comme le montrent les résultats du tableau 3, la corrélation entre les températures de ramollissement et la température de disparition ,des bandes IR correspondant aux liaisons hydrogène pour les exemples C6 et C4 est établie car les températures de rupture sont quasi identiques au températures de ramollissement.

De plus quel que soit l'organogélateur utilisé, son action est équivalente. Elle se caractérise par une diminution de la pénétrabilité $P_{25}$, une augmentation de la TBA et une augmentation de l'indice Pfeiffer. Ceci traduit une dureté et une consistance plus élevées des bases bitumes additivées avec les différents organogélateurs.

De même, plus la concentration en organogélateur est importante, plus la dureté et la consistance du bitume sont importantes. Un réseau plus important de liaisons hydrogène augmente la dureté aux températures d'usage du bitume.

Enfin, les viscosités à une température donnée entre le bitume seul et le bitume additivé sont équivalentes. L'ajout d'organogélateur permet de durcir la composition bitumineuse sans augmenter la viscosité à chaud de la composition bitumineuse.

**Exemple 2 : Préparation d'une composition bitume/organogélateur avec des molécules organogélatrices de nature différente (VII)**

Les compositions sont préparées de la même façon que dans l'exemple 1. La concentration en organogélateur est de 3%. L'organogélateur (par exemple $C_{13}$ ou $C_{14}$) est constitué d'un premier type $T_1$ de molécules organogélatrices ($A_1$) et d'un deuxième type $T_2$ de molécules organogélatrices ($B_1$ ou $B_2$). Le rapport molaire entre les deux types $T_1$ et $T_2$ est de 1 pour 1.

- Aminopyrimidine+acide barbiturique

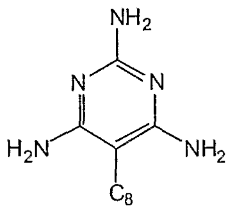 + 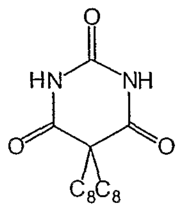 $C_{13}$

$A_1$ $B_1$

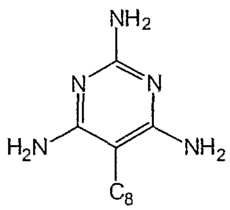 + 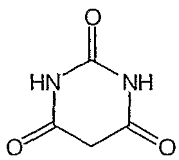 $C_{14}$

$A_1$ $B_2$

La composition $C_{13}$ comprend un dérivé d'aminopyrimidine $A_1$, la 5-octyl-2, 4, 6-triaminopyrimidine et un dérivé d'acide barbiturique $B_1$, le 5,5-dioctylbarbituric acide.

La composition $C_{14}$ comprend un dérivé d'aminopyrimidine $A_1$ la 5-octyl-2, 4, 6-triaminopyrimidine et de l'acide barbiturique $B_2$.

Tableau 4

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ | 76 | 47,5 | -0,8 | 267 | 165 |
| $C_{13}$ | 59 | 52,0 | -0,31 | 276 | 168 |
| $C_{14}$ | 61 | 52,5 | -0,11 | 311 | 186 |

- Phénol+sulfocuccinate

La composition $C_{15}$ comprend le sel de sodium de dioctyl sulfosuccinate et l'acide tannique.

La composition $C_{16}$ comprend le sel de sodium de dihexyl sulfosuccinate et l'acide tannique.

La composition $C_{17}$ comprend le sel de sodium de dihexyl sulfosuccinate et le lauryl gallate.

La composition $C_{18}$ comprend le sel de sodium de dihexyl sulfosuccinate et le 2-naphtol.

Tableau 5

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ | 76 | 47,5 | -0,8 | 267 | 165 |
| $C_{15}$ | 71 | 52,2 | 0,2 | 277 | 163 |
| $C_{16}$ | 60 | 52,8 | -0,08 | 253 | 144 |
| $C_{17}$ | 70 | 50,8 | -0,17 | 268 | 164 |
| $C_{18}$ | 68 | 51,4 | -0,09 | 267 | 164 |

Des conclusions identiques à celles de l'exemple 1 peuvent être faites.

**Exemple 3 : Préparation d'une composition bitume/organogélateur avec comme organogélateur un dérivé du sorbitol (III) le 1,3:2,4-Di-O-benzylidene-D-sorbitol (DBS).**

Les compositions sont préparées de la même façon que dans l'exemple 1. On utilise l'organogélateur à différentes concentrations.

Tableau 6

| Compositions | Concentration en organogélateur |
|---|---|
| $C_1$ (témoin) | 0% |
| $C_{19}$ | 3% |
| $C_{20}$ | 1% |
| $C_{21}$ | 0,66% |
| $C_{22}$ | 0,33% |
| $C_{23}$ | 0,1% |

Les résultats sont consignés dans le tableau 7 suivant :

Tableau 7

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ (témoin) | 76 | 46,6 | -1,0 | 267 | 165 |
| $C_{19}$ | 36 | 161 | 10 | 310 | 125 |
| $C_{20}$ | 39 | 143,5 | 9,31 | 314 | 118 |
| $C_{21}$ | 46 | 131,5 | 8,95 | 298 | 115 |
| $C_{22}$ | 55 | 94 | 6,28 | 257 | 113 |
| $C_{23}$ | 74 | 47,8 | -0,82 | 253 | 111 |

On constate que l'ajout du DBS permet d'augmenter significativement la température Bille et Anneau des compositions et ce même à de faibles concentrations en DBS (voir par exemple $C_{22}$). La pénétrabilité diminue également avec l'ajout du DBS. Les viscosités à 140°C et 160°C des compositions additivées sont équivalentes à celles du bitume seul.

**Exemple 4 : Préparation d'une composition bitume/organogélateur de formule (IV)**

Les compositions sont préparées de la même façon que dans l'exemple 1. On utilise les différents organogélateurs du Tableau 8.

Tableau 8

| Compositions | Nature de l'organogélateur | Concentration en organogélateur |
|---|---|---|
| $C_1$ (témoin) | - | 0% |
| $C_{24}$ | $HOOC-(CH_2)_4-COOH$ | 3% |
| $C_{25}$ | $HOOC-(CH_2)_5-COOH$ | 3% |
| $C_{26}$ | $HOOC-(CH_2)_6-COOH$ | 3% |
| $C_{27}$ | $HOOC-(CH_2)_7-COOH$ | 3% |
| $C_{28}$ | $HOOC-(CH_2)_8-COOH$ | 3% |
| $C_{29}$ | $HOOC-(CH_2)_9-COOH$ | 3% |
| $C_{30}$ | $HOOC-(CH_2)_{10}-COOH$ | 3% |
| $C_{31}$ | $HOOC-(CH_2)_{12}-COOH$ | 3% |

Tableau 9

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ (témoin) | 76 | 46,6 | -1,0 | 267 | 165 |
| $C_{24}$ | 52 | 68,8 | 2,73 | 280 | 114 |
| $C_{25}$ | 57 | 64,4 | 2,21 | 250 | 108 |
| $C_{26}$ | 55 | 77,5 | 4,23 | 242 | 104 |
| $C_{27}$ | 37 | 103,6 | 6,22 | 223 | 100 |
| $C_{28}$ | 39 | 104,8 | 6,46 | 225 | 97 |
| $C_{29}$ | 35 | 106,3 | 6,34 | 220 | 97 |
| $C_{30}$ | 29 | 110,5 | 6,28 | 217 | 95 |
| $C_{31}$ | 28 | 110 | 6,16 | 217 | 96 |

Avec les diacides, les viscosités des compositions sont équivalentes et même inférieures à celle du bitume seul. A température ambiante, les compositions selon l'invention sont nettement plus dures que le bitume seul. A chaud, les compositions selon l'invention ont une température Bille et Anneau nettement supérieures à celles du bitume seul.

**Exemple 5 : Préparation d'une composition bitume/organogélateur avec comme organogélateur un dérivé du sorbitol (III) le 1,3:2,4-bis-(p-methylbenzylidene)-sorbitol (MDBS).**

Les compositions sont préparées de la même façon que dans l'exemple 1. On utilise le MDBS à différentes concentrations (Tableau 10).
Le 1,3:2,4-Di-O-(4,3-methylbenzylidene)-D-sorbitol (MDBS) a pour formule :

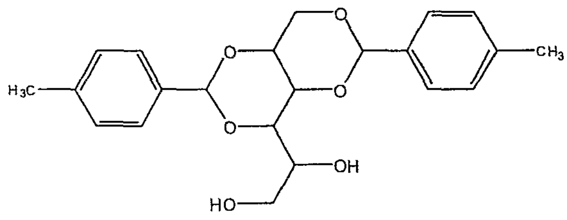

Tableau 10

| Compositions | Concentration en organogélateur |
|---|---|
| $C_1$ (témoin) | 0% |
| $C_{32}$ | 3% |
| $C_{33}$ | 1% |
| $C_{34}$ | 0,66% |
| $C_{35}$ | 0,5% |

Les résultats sont consignés dans le tableau 11 suivant :

Tableau 11

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ (témoin) | 76 | 46,6 | -1,0 | 267 | 165 |
| $C_{32}$ | 63 | 57 | 1,0 | - | - |
| $C_{33}$ | 50 | 85 | 4,97 | 301 | 130 |
| $C_{34}$ | 48 | 95 | 6,9502 | 286 | 124 |
| $C_{35}$ | 52 | 85 | 5,08 | 291 | 126 |

On constate que l'ajout du MDBS permet d'augmenter la température Bille et Anneau des compositions. La pénétrabilité diminue également avec l'ajout du MDBS. Les viscosités à 140°C et 160°C des compositions additivées sont équivalentes à celles du bitume seul.

**Exemple 6 : Préparation d'une composition bitume/organogélateur de formule (II)**

Les compositions sont préparées de la même façon que dans l'exemple 1. On utilise quatre organogélateurs répondant à la formule (II) :

- l'Irgaclear XT386 vendu par Ciba (y égal à 0, Z étant le groupe $Z_1$), aux concentrations suivantes (Tableau 12) :

Tableau 12

| Compositions | Concentration en organogélateur |
|---|---|
| $C_1$ (témoin) | 0% |
| $C_{36}$ | 3% |
| $C_{37}$ | 1% |
| $C_{38}$ | 0,66% |

- un composé de formule :

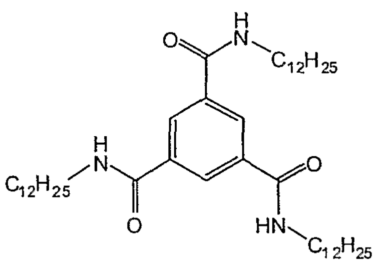

Avec y égal à 0, Z étant le groupe $Z_1$ et R le groupe $C_{12}H_{25}$, à la concentration de 3% en masse ($C_{39}$).
- un composé de formule :

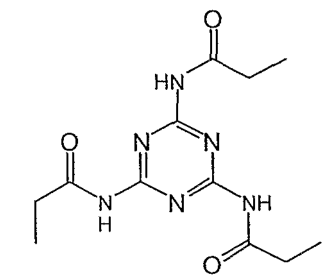

Avec x égal à 0, Z étant le groupe $Z_2$ et R' le groupe $C_2H_5$, à la concentration de 3% en masse ($C_{40}$).
- un composé de formule :

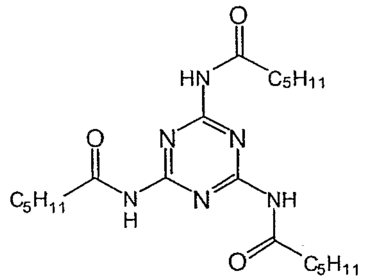

Avec x égal à 0, Z étant le groupe $Z_2$ et R' le groupe $C_5H_{11}$, à la concentration de 3% en masse ($C_{41}$).

Les résultats sont consignés dans le tableau 13 suivant :

Tableau 13

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ (témoin) | 76 | 46,6 | -1,0 | 267 | 165 |
| $C_{36}$ | 57 | 55,0 | -0,29 | - | - |
| $C_{37}$ | 66 | 52,5 | 0,09 | 310 | 137 |
| $C_{38}$ | 72 | 48,8 | -0,62 | 288 | 128 |
| $C_{39}$ | 52 | 95 | 6,23 | 279 | 103 |
| $C_{40}$ | 68 | 48,8 | -0,77 | 292 | 131 |
| $C_{41}$ | 72 | 48,5 | -0,70 | 282 | 114 |

Avec les organogélateurs de formule (II), les viscosités des compositions sont équivalentes et même inférieures à celle du bitume seul. A température ambiante, les compositions selon l'invention sont plus dures que le bitume seul. A chaud, les compositions selon l'invention ont une température Bille et Anneau supérieures à celles du bitume seul.

**Exemple 7 : Préparation d'une composition bitume/organogélateur de formule (VI)**

Les compositions sont préparées de la même façon que dans l'exemple 1. On utilise deux organogélateurs répondant à la formule **(VI) :**

- $C_{12}H_{25}$-NH-CO-CO-NH-$C_{12}H_{25}$ (concentration 2%, $C_{42}$)
- $C_8H_{17}$-NH-CO-CO-NH-$C_8H_{17}$ (concentration 3%, $C_{43}$)

Tableau 14

| Compositions | Pénétrabilité $P_{25}$ | Point de ramollissement TBA | Indice Pfeiffer IP | Viscosité à 140°C | Viscosité à 160°C |
|---|---|---|---|---|---|
| $C_1$ (témoin) | 76 | 46,6 | -1,0 | 267 | 165 |
| C42 | 74 | 50 | -0,22 | 204 | 92 |
| $C_{43}$ | 62 | 50 | -0,69 | 237 | 107 |

Conclusion générale

Le bitume est durci aux températures d'usage par l'organogélateur constitués par une même molécule organogélatrice ou par deux molécules de nature chimique différente ; la viscosité à chaud n'étant pas augmentée par rapport à celle du bitume non additivé.

## Revendications

1. Composition bitumineuse comprenant une partie majeure d'au moins un bitume et une partie mineure d'au moins un additif chimique **caractérisée en ce que** l'additif est un organogélateur créant un réseau de liaisons hydrogène entre molécules organogélatrices qui ont une masse molaire inférieure ou égale à 2000 $gmol^{-1}$, ledit organogélateur comprenant au moins un donneur de liaisons hydrogène **D,** au moins un accepteur de liaisons hydrogène **A** et au moins un compatibilisant **C** dans le bitume, le dit compatibilisant **C** comprenant un groupe choisi parmi:

   - au moins une chaîne hydrocarbonée linéaire comprenant au moins 4 atomes de carbone, ou
   - au moins un cycle aliphatique de 3 à 8 atomes, ou
   - au moins un système polycyclique condensé aliphatique, ou en partie aromatique ou encore entièrement aromatique, chaque cycle comprenant 5 ou 6 atomes, pris seuls ou en mélange.

2. Composition selon la revendication 1 **caractérisée en ce que** le donneur **D** comprend un hétéroatome porteur d'un hydrogène choisi parmi l'azote N, l'oxygène O et/ou le soufre S, de préférence le donneur **D** est choisi parmi les groupements alcool, thiol, phénol, amines primaires, amines secondaires, ammoniums quaternaires, amides, urées, hydrazines, acides carboxyliques, oximes, hydrazones, imines et leurs combinaisons.

3. Composition selon l'une quelconque des revendications 1 à 2 **caractérisée en ce que** l'accepteur **A** comprend un hétéroatome porteur de doublets électroniques choisi parmi l'oxygène O, le soufre S, l'azote N et/ou le phosphore P, de préférence l'accepteur **A** est choisi parmi les groupements C=O, S=O, N=O ou P=O et les groupements hydrocarbonés linéaires ou cycliques contenant dans leur chaîne hydrocarbonée un hétéroatome d'oxygène O, de soufre S, d'azote N ou de phosphore P, et avantageusement l'accepteur **A** est choisi parmi les groupements alcools, phénols, amides, esters, urées, hydrazines, acides, cétones, aldéhydes, lactones, lactames, anhydrides, imides, sulfoxydes, sulfones, sulfonates, sulfates, sulfites, acides sulfoniques, sulfures, éthers, phosphines, phosphites, phosphonates, phosphates, nitrites ou nitrates et leurs combinaisons.

4. Composition selon l'une quelconque des revendications 1 à 3 **caractérisé en ce que** l'organogélateur comprend des molécules organogélatrices de structure chimique identique.

5. Composition selon l'une quelconque des revendications précédentes 1 à 4 **caractérisée en ce que** l'organogélateur comprend au moins un motif de formule générale (I) :

   $$R\text{-}(NH)_nCONH\text{-}(X)_m\text{-}NHCO(NH)_n\text{-}R',$$

   - les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
   - le groupement X contient une chaîne hydrocarbonée, saturée ou insaturée, linéaire, cyclique ou ramifiée, comprenant de 1 à 22 atomes de carbone, éventuellement substituée, et comprenant éventuellement des

hétéroatomes, des cycles et/ou des hétérocycles ;
- n et m sont des entiers ayant une valeur de 0 ou 1 indépendamment l'un de l'autre ;

de préférence :

- l'organogélateur comprend un motif hydrazide quand n et m ont une valeur de 0 ; ou
- l'organogélateur comprend deux motifs amide quand n a une valeur de 0 et m a une valeur de 1 ; ou
- l'organogélateur comprend deux motifs urées quand n et m ont une valeur de 1.

**6.** Composition selon la revendication 5 **caractérisée en ce que** le groupement R et/ou R' comprend une chaîne hydrocarbonée aliphatique de 4 à 22 atomes de carbone, notamment, choisie parmi les groupements $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

**7.** Composition selon l'une quelconque des revendications 5 à 6 **caractérisée en ce que** le groupement X comprend une chaîne hydrocarbonée aliphatique de 1 à 2 atomes de carbone ou le groupement X comprend deux cycles de 6 carbones reliés par un groupement $CH_2$, ces cycles étant aliphatiques ou aromatiques.

**8.** Composition selon l'une quelconque des revendications 1 à 4 **caractérisée en ce que** l'organogélateur comprend au moins un motif de formule générale (II) :

$$(R\text{-}NHCO)_x\text{-}Z\text{-}(NHCO\text{-}R')_y$$

- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants :

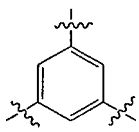
$Z_1$

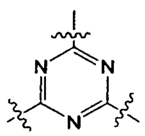
$Z_2$

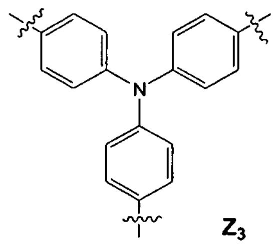
$Z_3$

- x et y sont des entiers différents de valeur variant de 0 à 3 et tels que x+y=3.

**9.** Composition selon l'une quelconque des revendications 1 à 4 **caractérisée en ce que** l'organogélateur comprend au moins un dérivé du sorbitol (III), de préférence un produit de réaction entre un aldéhyde et le D-sorbitol, avantageusement le 1,3:2,4-Di-O-benzylidene-D-sorbitol.

**10.** Composition selon l'une quelconque des revendications 1 à 4 **caractérisée en ce que** l'organogélateur comprend au moins un motif de formule générale (IV) : $R''\text{-}(COOH)_z$
avec R" une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z un entier variant de 2 à 4.

**11.** Composition selon la revendication 10 **caractérisée en ce que** l'organogélateur est un diacide de formule générale $HOOC\text{-}C_wH_{2w}\text{-}COOH$ avec w un entier variant de 4 à 22, de préférence de 4 à 12 où z = 2 et $R'' = C_wH_{2w}$, de préférence l'organogélateur est un diacide choisi parmi les diacides suivants : acide adipique, acide pimélique, acide subérique, acide azélaique, acide sébacique, acide undécanedioïque, acide 1,2-dodécanedioïque ou acide tétradécanedioïque.

**12.** Composition selon l'une quelconque des revendications 1 à 4 **caractérisée en ce que** l'organogélateur comprend au moins un motif de formule générale (V) :

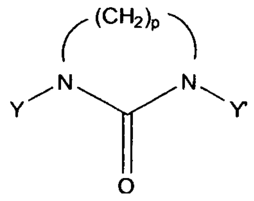

les groupements Y et Y' représentent indépendamment l'un de l'autre, un atome ou groupement choisi parmi : H, $-(CH_2)q-CH_3$, $-(CH_2)q-NH_2$, $-(CH_2)q-OH$, - $(CH_2)q-COOH$ ou

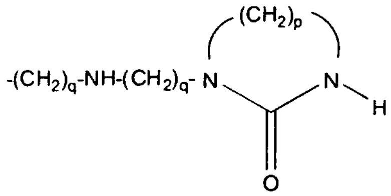

avec q un entier variant de 2 à 18, de préférence de 2 à 10, de préférence de 2 à 4 et p un entier supérieur ou égal à 2, de préférence ayant une valeur de 2 ou 3, de préférence l'organogélateur a pour formule :

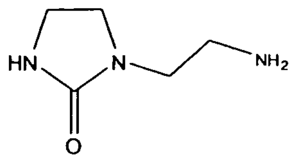

**13.** Composition selon l'une quelconque des revendications 1 à 4 **caractérisée en ce que** l'organogélateur comprend au moins un motif de formule générale (VI) : R-NH-CO-CO-NH-R'
avec R et R', identiques ou différents, qui représentent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles.

**14.** Composition selon l'une quelconque des revendications 1 à 3 **caractérisé en ce que** l'organogélateur (VII) comprend au moins 2 molécules organogélatrices de structure chimique différente, l'ensemble des trois motifs A, D et C se retrouvant dans l'organogélateur.

**15.** Composition selon la revendication 14 **caractérisée en ce que** l'organogélateur comprend un dérivé d'une amine et un dérivé d'acide carboxylique ou **en ce que** l'organogélateur comprend un dérivé d'une aminopyrimidine et un dérivé d'acide barbiturique, ou **en ce que** l'organogélateur comprend un dérivé de sulfosuccinate et un dérivé du phénol.

**16.** Composition selon l'une quelconque des revendications 1 à 15 **caractérisée en ce que** les molécules organogélatrices ont une masse molaire inférieure ou égale à 1000 $gmol^{-1}$.

**17.** Composition selon l'une quelconque des revendications 1 à 16 **caractérisée en ce que** l'organogélateur est présent de 0,1 à 5% en masse par rapport au bitume.

**18.** Composition selon l'une quelconque des revendications 1 à 17 **caractérisée en ce que** le bitume comprend en outre au moins un polymère et/ou un fluxant.

**19.** Composition selon l'une quelconque des revendications 1 à 18 **caractérisée en ce que** le bitume est choisi parmi les résidus de distillation atmosphérique, les résidus de distillation sous vide, les résidus viscoréduits, les résidus soufflés, leurs mélanges et leurs combinaisons.

**20.** Utilisation d'une composition bitumineuse selon l'une quelconque des revendications 1 à 19 pour fabriquer un liant bitumineux, notamment un liant anhydre, une émulsion bitumineuse, un bitume polymère ou un bitume fluxé, de

préférence en mélange avec des granulats pour fabriquer un enduit superficiel, un enrobé à chaud, un enrobé à froid, un enrobé coulé à froid, une grave émulsion ou une couche de roulement, avantageusement pour fabriquer un revêtement d'étanchéité, une membrane ou une couche d'imprégnation.

**21.** Procédé pour obtenir une composition bitumineuse selon l'une des revendications 1 à 19, **caractérisé en ce que** l'organogélateur est introduit à chaud à des températures variant de 140 à 180°C, soit dans le bitume seul, dans le bitume modifié ou non par des polymères, dans le bitume sous forme de liant bitumineux ou dans le bitume lorsque celui-ci est sous forme de liant anhydre, d'enrobé, ou d'enduit superficiel, soit au cours de la fabrication desdits bitume, liants ou enduits, de préférence pour obtenir une composition bitumineuse dure aux températures d'usage sans augmenter sa viscosité à chaud.

## Patentansprüche

**1.** Bitumenzusammensetzung, umfassend einen Hauptanteil aus zumindest einem Bitumen und einen Nebenanteil aus zumindest einem chemischen Zusatz, **dadurch gekennzeichnet, dass** es sich bei dem Zusatz um einen organischen Gelbildner handelt, der ein Netz von Wasserstoffverbindungen zwischen gelbildenden organischen Molekülen mit einer Molmasse von kleiner oder gleich 2000 $gmol^{-1}$ erzeugt, wobei der organische Gelbildner mindestens einen Wasserstoffbindungsdonor **D,** mindestens einen Wasserstoffbindungsakzeptor **A** und mindestens ein Kompatibilisierungsmittel **C** im Bitumen umfasst, wobei das Kompatibilisierungsmittel **C** eine Gruppe umfasst, die ausgewählt ist aus:

- mindestens einer linearen Kohlenwasserstoffkette, die mindestens 4 Kohlenstoffatome umfasst, oder
- mindestens einem aliphatischen Ring mit 3 bis 8 Atomen, oder
- mindestens einem kondensierten polyzyklischen System, das aliphatisch oder teilweises aromatisch oder auch vollaromatisch ist, wobei jeder Ring 5 oder 6 Atome umfasst, allein genommen oder im Gemisch.

**2.** Zusammensetzung nach Anspruch 1, **dadurch gekennzeichnet, dass** der Donor **D** ein Wasserstoff tragendes Heteroatom umfasst, ausgewählt aus Stickstoff N, Sauerstoff 0 und/oder Schwefel S, wobei der Donor **D** vorzugsweise aus Alkohol-, Thiol-, Phenol-, primären Amino-, sekundären Amino-, quartären Ammonium-, Amid-, Harnstoff-, Hydrazin-, Carbonsäure-, Oxim-, Hydrazon-, Imingruppen und deren Verbindungen ausgewählt ist.

**3.** Zusammensetzung nach einem der Ansprüche 1 bis 2, **dadurch gekennzeichnet, dass** der Akzeptor **A** ein Elektronenpaar tragendes Heteroatom umfasst, ausgewählt aus Sauerstoff O, Schwefel S, Stickstoff N und/oder Phosphor P, wobei der Akzeptor **A** vorzugsweise aus C=O-, S=O-, N=O- oder P=O-Gruppen und linearen oder zyklischen Kohlenwasserstoffgruppen ausgewählt ist, die in ihrer Kohlenwasserstoffkette ein Heteroatom von Sauerstoff 0, Schwefel S, Stickstoff N oder Phosphor P enthalten, und wobei der Akzeptor **A**-vorteilhafterweise aus Alkohol-, Phenol-, Amid-, Ester-, Harnstoff-, Hydrazin-, Säure-, Keton-, Aldehyd-, Lacton-, Lactam-, Anhydrid-, Imid-, Sulfoxid-, Sulfon-, Sulfonat-, Sulfat-, Sulfit-, Sulfonsäure-, Sulfid-, Ether-, Phosphin-, Phosphit-, Phosphonat-, Phosphat-, Nitrit- oder Nitratgruppen und deren Verbindungen ausgewählt ist.

**4.** Zusammensetzung nach einem der Ansprüche 1 bis 3, **dadurch gekennzeichnet, dass** der organische Gelbildner gelbildende organische Moleküle mit identischer chemischer Struktur umfasst.

**5.** Zusammensetzung nach einem der vorangehenden Ansprüche 1 bis 4, **dadurch gekennzeichnet, dass** der organische Gelbildner mindestens eine Einheit der allgemeinen Formel (I) umfasst:

$$R\text{-}(NH)_nCONH\text{-}(X)_m\text{-}NHCO(NH)_n\text{-}R',$$

- wobei die identischen oder unterschiedlichen Gruppen R und R' eine Kohlenwasserstoffkette enthalten, die gesättigt oder ungesättigt, linear, verzweigt oder zyklisch ist, 1 bis 22 Kohlenstoffatome umfasst, gegebenenfalls substituiert ist, und gegebenenfalls Heteroatome, Zyklen und/oder Heterozyklen umfasst;
- wobei die Gruppe X eine Kohlenwasserstoffkette enthält, die gesättigt oder ungesättigt, linear, zyklisch oder verzweigt ist, 1 bis 22 Kohlenstoffatome umfasst, gegebenenfalls substituiert ist, und gegebenenfalls Heteroatome, Zyklen und/oder Heterozyklen umfasst;
- n und m ganze Zahlen sind, die, unabhängig voneinander, einen Wert von 0 oder 1 haben;

wobei-vorzugsweise:

- der organische Gelbildner eine Hydrazideinheit umfasst, wenn n und m einen Wert von 0 haben; oder
- der organische Gelbildner zwei Amideinheiten umfasst, wenn n einen Wert von 0 und m einen Wert von 1 hat; oder
- der organische Gelbildner zwei Harnstoffeinheiten umfasst, wenn n und m einen Wert von 1 haben.

**6.** Zusammensetzung nach Anspruch 5, **dadurch gekennzeichnet, dass** die Gruppe R und/oder R' eine aliphatische Kohlenwasserstoffkette mit 4 bis 22 Kohlenstoffatomen umfass(t)en, die insbesondere aus den Gruppen $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$ ausgewählt ist.

**7.** Zusammensetzung nach einem der Ansprüche 5 bis 6, **dadurch gekennzeichnet, dass** die Gruppe X eine aliphatische Kohlenwasserstoffkette mit 1 bis 2 Kohlenstoffatomen umfasst oder die Gruppe X zwei Ringe mit 6 Kohlenstoffatomen umfasst, die durch eine $CH_2$-Gruppe verbunden sind, wobei diese Ringe aliphatisch oder aromatisch sind.

**8.** Zusammensetzung nach einem der Ansprüche 1 bis 4, **dadurch gekennzeichnet, dass** der organische Gelbildner mindestens eine Einheit der allgemeinen Formel (II) umfasst:

$$(R\text{-}NHCO)_x\text{-}Z\text{-}(NHCO\text{-}R')_y$$

- wobei R und R', identisch oder unterschiedlich, eine Kohlenwasserstoffkette enthalten, die gesättigt oder ungesättigt, linear, verzweigt oder zyklisch ist, 1 bis 22 Kohlenstoffatome umfasst, gegebenenfalls substituiert ist, und gegebenenfalls Heteroatome, Zyklen und/oder Heterozyklen umfasst;
- Z eine trifunktionalisierte Gruppe darstellt, ausgewählt aus den folgenden Gruppen:

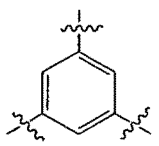
$Z_1$

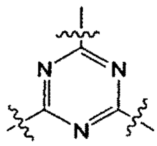
$Z_2$

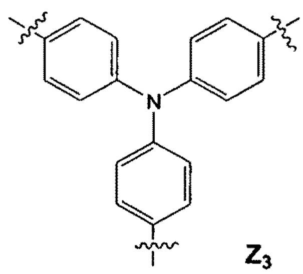
$Z_3$

- x und y ganze Zahlen mit verschiedenen Werten zwischen 0 und 3, und so dass x+y=3 sind.

**9.** Zusammensetzung nach einem der Ansprüche 1 bis 4, **dadurch gekennzeichnet, dass** der organische Gelbildner mindestens ein Sorbitderivat (III) umfasst, vorzugsweise ein Reaktionsprodukt zwischen einem Aldehyd und dem D-Sorbit, vorteilhafterweise dem 1,3:2,4-Di-O-Benzyliden-D-Sorbit.

**10.** Zusammensetzung nach einem der Ansprüche 1 bis 4, **dadurch gekennzeichnet, dass** der organische Gelbildner mindestens eine Einheit der allgemeinen Formel (IV) umfasst: $R''\text{-}(COOH)_z$

- wobei R" eine lineare oder verzweigte Kette darstellt, die gesättigt oder ungesättigt ist und 4 bis 68 Kohlenstoffatome umfasst, vorzugsweise 4 bis 54 Kohlenstoffatome, noch bevorzugter 4 bis 36 Kohlenstoffatome, und z eine ganze Zahl zwischen 2 und 4 ist.

**11.** Zusammensetzung nach Anspruch 10, **dadurch gekennzeichnet, dass** der organische Gelbildner eine Disäure der allgemeinen Formel $HOOC\text{-}C_wH_{2w}\text{-}COOH$ ist, wobei w eine ganze Zahl zwischen 4 und 22 ist, vorzugsweise zwischen 4 und 12, wobei z = 2 und R" = $C_wH_{2w}$ ist, wobei der organische Gelbildner vorzugsweise eine Disäure ist, ausgewählt aus den folgenden Disäuren: Adipinsäure, Pimelinsäure, Suberinsäure, Azelainsäure, Sebacinsäure, Undecandisäure, 1,2-Dodecandisäure oder Tetradecandisäure.

**12.** Zusammensetzung nach einem der Ansprüche 1 bis 4, **dadurch gekennzeichnet, dass** der organische Gelbildner mindestens eine Einheit der allgemeinen Formel (V) umfasst:

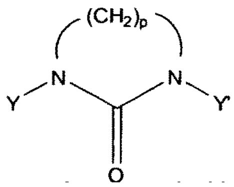

- wobei die Gruppen Y und Y' unabhängig voneinander ein Atom oder eine Gruppe darstellen, ausgewählt aus: H, $-(CH_2)_q-CH_3$, $-(CH_2)_q-NH_2$, $-(CH_2)_q-OH$, - $(CH_2)q-COOH$ oder

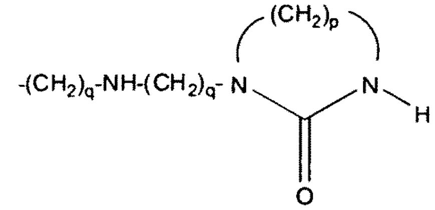

- wobei q eine ganze Zahl zwischen 2 und 18 ist, vorzugsweise zwischen 2 und 10, vorzugsweise zwischen 2 und 4, und p eine ganze Zahl größer oder gleich 2 ist, vorzugsweise mit einem Wert von 2 oder 3, und der organische Gelbildner vorzugsweise die folgende Formel hat:

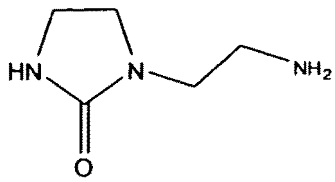

13. Zusammensetzung nach einem der Ansprüche 1 bis 4, **dadurch gekennzeichnet, dass** der organische Gelbildner mindestens eine Einheit der allgemeinen Formel (VI) umfasst: R-NH-CO-CO-NH-R'

    - wobei R und R', identisch oder unterschiedlich, eine Kohlenwasserstoffkette darstellen, die gesättigt oder ungesättigt, linear, verzweigt oder zyklisch ist, 1 bis 22 Kohlenstoffatome umfasst, gegebenenfalls substituiert ist, und gegebenenfalls Heteroatome, Zyklen und/oder Heterozyklen umfasst.

14. Zusammensetzung nach einem der Ansprüche 1 bis 3, **dadurch gekennzeichnet, dass** der organische Gelbildner (VII) mindestens 2 gelbildende organische Moleküle mit unterschiedlicher chemischer Struktur umfasst, wobei sich die Gesamtheit der drei Einheiten **A, D** und **C** in dem organischen Gelbildner wiederfindet.

15. Zusammensetzung nach Anspruch 14, **dadurch gekennzeichnet, dass** der organische Gelbildner ein Aminoderivat und ein Carbonsäurederivat umfasst, oder dadurch, dass der organische Gelbildner ein Aminopyrimidinderivat und ein Barbitursäurederivat umfasst, oder dadurch, dass der organische Gelbildner ein Sulfosuccinatderivat und ein Phenolderivat umfasst.

16. Zusammensetzung nach einem der Ansprüche 1 bis 15, **dadurch gekennzeichnet, dass** die gelbildenden organischen Moleküle eine Molmasse aufweisen, die kleiner oder gleich 1000 $gmol^{-1}$ ist.

17. Zusammensetzung nach einem der Ansprüche 1 bis 16, **dadurch gekennzeichnet, dass** der organische Gelbildner mit 0,1 bis 5 Masse% im Vergleich zu dem Bitumen vorliegt.

18. Zusammensetzung nach einem der Ansprüche 1 bis 17, **dadurch gekennzeichnet, dass** das Bitumen ferner mindestens ein Polymer und/oder ein Flussmittel umfasst.

19. Zusammensetzung nach einem der Ansprüche 1 bis 18, **dadurch gekennzeichnet, dass** das Bitumen ausgewählt ist aus atmosphärischen Destillationsrückständen, Vakuumdestillationsrückständen, Rückständen der Viskositätsbrechungs, Blasrückständen, deren Mischungen und Kombinationen.

20. Verwendung einer Bitumenzusammensetzung nach einem der Ansprüche 1 bis 19 zur Herstellung eines bituminösen Bindemittels, insbesondere eines wasserfreien Bindemittels, einer Bitumenemulsion, eines Polymerbitumens oder eines Fluxbitumens, vorzugsweise gemischt mit Granulaten zur Herstellung eines Oberflächenüberzugs, eines Heißmischguts, eines Kaltmischguts, einer Kalteinbaudecke, einer schweren Emulsion oder einer Fahrschicht, vorteilhafterweise zur Herstellung einer Abdichtungsbeschichtung, einer Membran oder einer Imprägnierungsschicht.

21. Verfahren zur Gewinnung einer Bitumenzusammensetzung nach einem der Ansprüche 1 bis 19, **dadurch gekennzeichnet, dass** der organische Gelbildner mit einer Temperatur zwischen 140 und 180°C heiß eingeführt wird, entweder in das Bitumen allein, in das durch Polymere modifizierte oder nicht modifizierte Bitumen, in das Bitumen in Form von bituminösem Bindemittel oder in das Bitumen, wenn dieses in Form eines wasserfreien Bindemittels, eines Mischguts oder eines Oberflächenüberzugs vorliegt, oder bei der Herstellung von Bitumen, Bindemittel oder Beschichtungen, vorzugsweise zur Gewinnung einer bei üblichen Temperaturen harten Bitumenzusammensetzung ohne dass ihre Schmelzviskosität dabei erhöht wird.

## Claims

1. Bituminous composition comprising a major proportion of at least one bitumen and a minor proportion of at least one chemical additive **characterized in that** the additive is a organogelator creating a network of hydrogen bonds between organogelling molecules which have a molar mass of less than or equal to 2000 $gmol^{-1}$, said organogelator comprising at least one hydrogen bond donor **D,** at least one hydrogen bond acceptor **A** and at least one compatibilizer **C** in the bitumen, said compatibilizer **C** comprising a group chosen from:

   - at least one linear hydrocarbon chain comprising at least 4 carbon atoms, or
   - at least one aliphatic ring of 3 to 8 atoms, or
   - at least one condensed polycyclic system which is aliphatic, or partly aromatic or also wholly aromatic, each ring comprising 5 or 6 atoms, alone or in a mixture.

2. Composition according to claim 1 **characterized in that** the donor **D** comprises a heteroatom bearing a hydrogen chosen from nitrogen N, oxygen O and/or sulphur S, preferably the donor **D** being chosen from the alcohol, thiol, phenol, primary amine, secondary amine, quaternary ammonium, amide, urea, hydrazine, carboxylic acid, oxime, hydrazone, imine groups and combinations thereof.

3. Composition according to any one of claims 1 to 2 **characterized in that** the acceptor **A** comprises a heteroatom bearing electronic doublets chosen from oxygen O, sulphur S, nitrogen N and/or phosphorus P, preferably the acceptor **A** being chosen from the C=O, S=O, N=O or P=O groups and the linear or cyclic hydrocarbon groups containing in their hydrocarbon chain a heteroatom of oxygen O, sulphur S, nitrogen N or phosphorus P, and advantageously, the acceptor **A** is chosen from the alcohol, phenol, amide, ester, urea, hydrazine, acid, ketone, aldehyde, lactone, lactame, anhydride, imide, sulphoxide, sulphone, sulphonate, sulphate, sulphite, sulphonic acid, sulphide, ether, phosphine, phosphite, phosphonate, phosphate, nitrite or nitrate groups and combinations thereof.

4. Composition according to any one of claims 1 to 3 **characterized in that** the organogelator comprises organogelling molecules of identical chemical structure.

5. Composition according to any one of the previous claims 1 to 4 **characterized in that** the organogelator comprises at least one unit of general formula (I):

$$R\text{-}(NH)_nCONH\text{-}(X)_m\text{-}NHCO(NH)_n\text{-}R',$$

   - the R and R' groups, identical or different, contain a linear, branched or cyclic, saturated or unsaturated hydrocarbon chain, comprising 1 to 22 carbon atoms, optionally substituted, and optionally comprising heteroatoms, rings and/or heterocycles;
   - the X group contains a linear, cyclic or branched, saturated or unsaturated hydrocarbon chain, comprising 1 to 22 carbon atoms, optionally substituted, and optionally comprising heteroatoms, rings and/or heterocycles;
   - n and m are integers having a value of 0 or 1 independently of each other; preferably:

     - the organogelator comprising a hydrazide unit when n and m have a value of 0; or
     - the organogelator comprising two amide units when n has a value of 0 and m has a value of 1; or

- the organogelator comprising two urea units when n and m have a value of 1.

**6.** Composition according to claim 5, **characterized in that** the R and/or R' group comprises an aliphatic hydrocarbon chain of 4 to 22 carbon atoms, in particular chosen from the $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$ groups.

**7.** Composition according to any one of claims 5 to 6 **characterized in that** the X group comprises an aliphatic hydrocarbon chain of 1 to 2 carbon atoms, or the X group comprises two rings of 6 carbon atoms linked by a $CH_2$ group, these rings being aliphatic or aromatic.

**8.** Composition according to any one of claims 1 to 4 **characterized in that** the organogelator comprises at least one unit of general formula (II):

$$(R\text{-}NHCO)_x\text{-}Z\text{-}(NHCO\text{-}R')_y$$

- R and R', identical or different, contain a linear, branched or cyclic, saturated or unsaturated hydrocarbon chain comprising 1 to 22 carbon atoms, optionally substituted, and optionally comprising heteroatoms, rings and/or heterocycles,
- Z represents a tri-functionalized group chosen from the following groups:

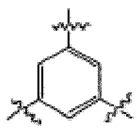
$Z_1$

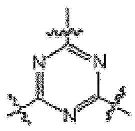
$Z_2$

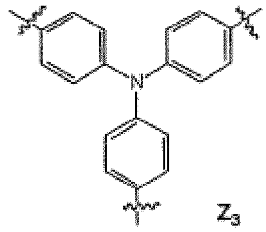
$Z_3$

- x and y are different integers with a value varying from 0 to 3 and such that x+y=3.

**9.** Composition according to any one of claims 1 to 4 **characterized in that** the organogelator comprises at least one sorbitol derivative (III), preferably a product of the reaction between an aldehyde and D-sorbitol, advantageously 1,3:2,4-Di-O-benzylidene-D-sorbitol.

**10.** Composition according to any one of claims 1 to 4 **characterized in that** the organogelator comprises at least one unit of general formula (IV): $R''\text{-}(COOH)_z$ with R" a linear or branched, saturated or unsaturated chain comprising 4 to 68 carbon atoms, preferably 4 to 54 carbon atoms, more preferentially 4 to 36 carbon atoms and z an integer varying from 2 to 4.

**11.** Composition according to claim 10 **characterized in that** the organogelator is a diacid of general formula $HOOC\text{-}C_wH_{2w}\text{-}COOH$ with w an integer varying from 4 to 22, preferably 4 to 12 where z = 2 and R" = $C_wH_{2w}$, preferably the organogelator being a diacid chosen from the following diacids: adipic acid, pimelic acid, suberic acid, azelaic acid, sebacic acid, undecanedioic acid, 1,2-dodecanedioic acid or tetradecanedioic acid.

**12.** Composition according to any one of claims 1 to 4 **characterized in that** the organogelator comprises at least one unit of general formula (V):

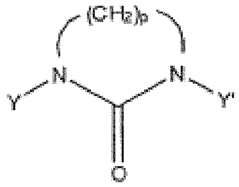

the Y and Y' groups represent independently of each other, an atom or group chosen from: H, $-(CH_2)q\text{-}CH_3$, $-(CH_2)q\text{-}NH_2$, $-(CH_2)q\text{-}OH$, $-(CH_2)q\text{-}COOH$ or

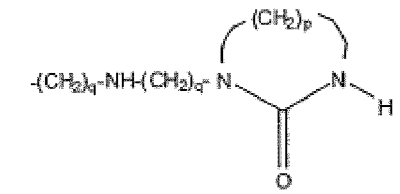

with q an integer varying from 2 to 18, preferably 2 to 10, preferably 2 to 4 and p an integer greater than or equal to 2, preferably having a value of 2 or 3, preferably the organogelator having the formula:

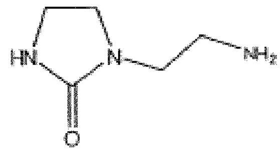

**13.** Composition according to any one of claims 1 to 4 **characterized in that** the organogelator comprises at least one unit of general formula (VI): R-NH-CO-CO-NH-R'
with R and R', identical or different, which represent a linear, branched or cyclic, saturated or unsaturated hydrocarbon chain, comprising 1 to 22 carbon atoms, optionally substituted, and optionally comprising heteroatoms, rings and/or heterocycles.

**14.** Composition according to any one of claims 1 to 3 **characterized in that** the organogelator (VII) comprises at least 2 organogelling molecules of different chemical structure, all of the three units **A**, **D** and **C** being found in the organogelator.

**15.** Composition according to claim 14 **characterized in that** the organogelator comprises an amine derivative and a carboxylic acid derivative, or **in that** the organogelator comprises an aminopyrimidine derivative and a barbituric acid derivative, or **in that** the organogelator comprises a sulphosuccinate derivative and a phenol derivative.

**16.** Composition according to any one of claims 1 to 15 **characterized in that** the organogelling molecules have a molar mass of less than or equal to 1000 $gmol^{-1}$.

**17.** Composition according to any one of claims 1 to 16 **characterized in that** the organogelator is present at 0.1 to 5% by mass with respect to the bitumen.

**18.** Composition according to any one of claims 1 to 17, **characterized in that** the bitumen also comprises at least one polymer and/or one flux:

**19.** Composition according to any one of claims 1 to 18 **characterized in that** the bitumen is chosen from the atmospheric distillation residues, the vacuum distillation residues, visbroken residues, blown residues, their mixtures and combinations thereof.

**20.** Use of a bituminous composition according to any one of claims 1 to 19 for manufacturing a bituminous binder, in particular an anhydrous binder, a bituminous emulsion, a polymer bitumen or a fluxed bitumen, preferably in a mixture with aggregates for manufacturing a surface dressing, a hot mix, a cold mix, a cold-cast mix, a gravel emulsion or a wearing course, advantageously for manufacturing a sealing coating a membrane or an impregnation layer.

**21.** Method for obtaining a bituminous composition according to one of claims 1 to 19, **characterized in that** the organogelator is introduced when hot at temperatures varying from 140 to 180°C, either into the bitumen alone, into the bitumen modified or not modified by polymers, into the bitumen in the form of bituminous binder or into the bitumen when the latter is in the form of anhydrous binder, bituminous mix, or surface dressing, or during the manufacture of said bitumens, binders or dressings, preferably for obtaining a bituminous composition which is hard at the temperatures of use without increasing its viscosity when hot.

Figure 1.

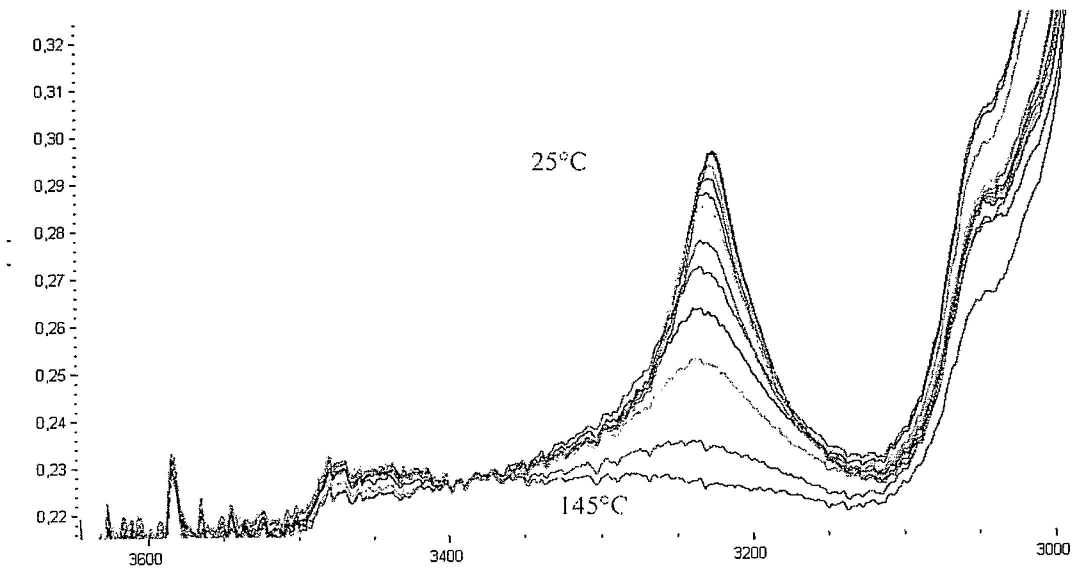


Figure 2.

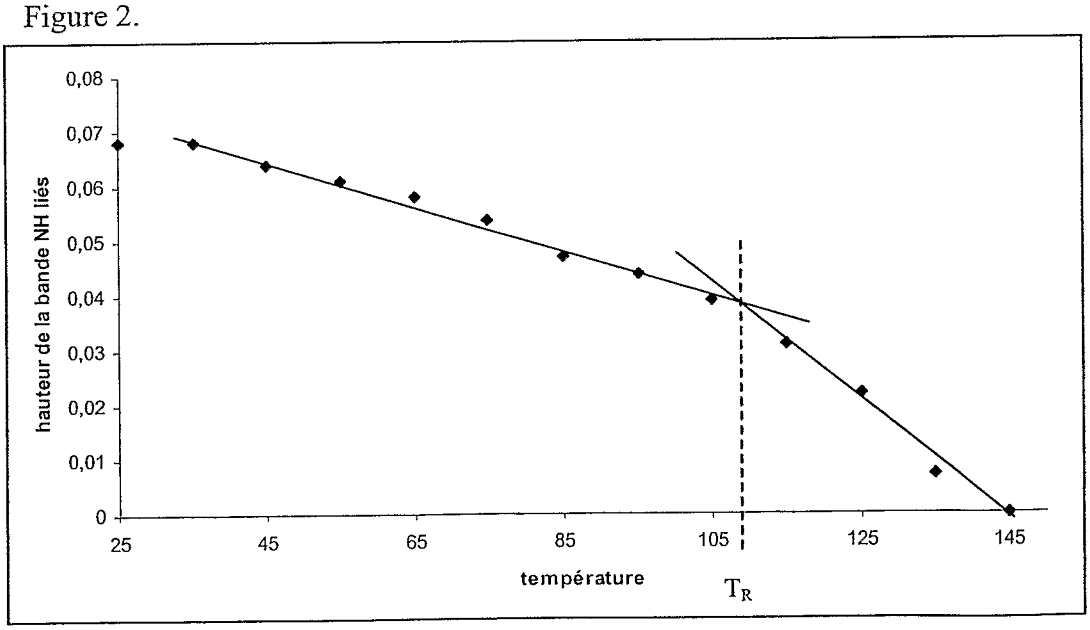

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2376188
- FR 7818534
- EP 0799280 A
- EP 0690892 A
- FR 2889198

### Littérature non-brevet citée dans la description

- **P. TERECH ; R. G. WEISS.** Low molecular mass gelators of organic liquids and the properties of their gels. *Chem. Rev.,* 1997, vol. 97, 3133-3159